# EUROPÄISCHE PATENTSCHRIFT

(11) **EP 3 495 097 B1**
(45) Veröffentlichungstag und Bekanntmachung des Hinweises auf die Patenterteilung: **25.09.2024**
(21) Anmeldenummer: 18210129.5
(22) Anmeldetag: 04.12.2018
(51) Int. Cl.: B25J 9/04

(54) **MOBILER KOMMISSIONIERROBOTER MIT GEKOPPELTEN ARMGELENKSDREHACHSEN DES ROBOTERARMS**
MOBILE ORDER PICKING ROBOT WITH COUPLED ARTICULATED ROTATING AXES OF THE ROBOT ARM
ROBOT DE PRÉPARATION DE COMMANDES MOBILE POURVU D'AXE DE ROTATION D'ARTICULATION DE BRAS COUPLÉ DU BRAS DE ROBOT

(30) Priorität: 11.12.2017 DE 102017129465; 19.12.2017 DE 102017130577
(43) Veröffentlichungstag der Anmeldung: 12.06.2019
(73) Patentinhaber: Linde Material Handling GmbH, 63743 Aschaffenburg (DE)
(72) Erfinder: Ehrenleitner, Franz, 72213 Altensteig-Walddorf (DE); KRUMBHOLZ, Peter, 63869 Jakobsthal (DE)
(74) Vertreter: Patentship Patentanwaltgesellschaft

(56) Entgegenhaltungen:
- EP-A2- 1 142 674
- WO-A1-2017/138377
- DE-U1- 8 713 515
- US-A- 5 085 556
- US-A1- 2018 265 297
- US-B1- 6 593 718

## Beschreibung

Die Erfindung betrifft einen mobilen Kommissionierroboter zur automatischen Kommissionierung von Objekten mit einem vertikal ausgerichteten Hubmast und einem daran höhenbeweglich angebrachten, horizontal ausgerichteten Roboterarm mit drei vom Hubmast ausgehend aneinander gereihten Armelementen mit aufsteigender Nummerierung, welche über Armgelenke mit vertikalen Armgelenksdrehachsen mit aufsteigender Nummerierung verfügen und welche über die Armgelenksdrehachsen gelenkig miteinander verbunden sind, wobei das letzte am äußeren Reihenende angeordnete Armelement über ein Handgelenk mit vertikaler Handgelenksdrehachse mit einem Aufnahmewerkzeug, insbesondere einem Greifer, zur Aufnahme der Objekte verbunden ist.

Unter Kommissionierung versteht man alle Methoden zur Zusammenstellung von bestimmten Objekten, insbesondere von Gütern in Warenlagern, aus einem bereitgestellten Gesamtsortiment. Dabei soll die Zusammenstellung aufgrund von Aufträgen, z.B. Kundenaufträgen oder Produktionsaufträgen erfolgen. In jüngster Zeit werden hierfür vermehrt automatische Systeme eingesetzt. Dabei werden z.B. Packstücke als zu kommissionierende Objekte von autonom betriebenen Transportfahrzeugen von einer Quellposition, z.B. einer Quellpalette, aufgenommen und auf einer auf dem Fahrzeug transportierten Zielpalette abgesetzt. Insbesondere werden hierzu mobile Kommissionierroboter verwendet, die die Packstücke selbstständig mittels Roboterarmen aufnehmen können. Diese Kommissionierroboter erhalten die Auftragsdaten wie Auftragsnummer, Koordinaten des Lagerortes, Stückzahl und Gewicht der Güter automatisch von einem Zentralrechner. Sie können z.B. bestimmte Regalfächer in Regallagern gezielt anfahren und das gewünschte Objekt mithilfe eines ein Aufnahmewerkzeug aufweisenden Greifsystems aus dem Regalfach entnehmen. Das Aufnahmewerkzeug kann als Greifer, beispielsweise als Adhäsionsgreifer oder Vakuumgreifer, ausgebildet sein. Das Greifen der Objekte wird auch als Picken bezeichnet.

Für den vollautonomen, mobilen Kommissionierprozess werden sinnvollerweise Sonderkinematiken des Roboterarms eingesetzt. Roboter mit Standardkinematiken (insbesondere 6-Achs-Industrieroboter) sind zu schwer, nicht für den mobilen Einsatz konzipiert und haben kinematische Einschränkungen, die einen sinnvollen Einsatz in diesem Gebiet verhindern.

Aus den genannten Anforderungen ergibt sich eine Minimalkinematik für die Picktätigkeit: Da der Füllgrad der Quellpaletten unterschiedlich ist (manchmal von ganz oben picken, manchmal von ganz unten) ist eine Hubachse nötig. Zusätzlich müssen Packstücke von der dem Fahrweg zugewandten Vorderkante der Palette oder von der abgewandten Hinterseite der Palette gepickt werden, was eine Verstellung in der Tiefe (als Linearbewegung) nötig macht. Die Paletten sind dabei meist im Europaletten-Format vorhanden (800 x 1200 mm) und werden meist mit der schmalen Seite zum Gang hin positioniert, sodass sich eine notwendige Greiftiefe von 1200 mm ergibt.

Diese Minimalkinematik hat die Einschränkung, dass für eine Positionsänderung in Gang-Längsrichtung der Fahrantrieb des mobilen Kommissionierroboters verwendet werden muss, was zu deutlichen Einbußen bei der Positioniergenauigkeit und bei der Zykluszeit führt.

Um diese Probleme zu umgehen, sind Kinematiken mit mindestens einer zusätzlichen vertikalen Drehachse bekannt. Die weiteren Drehachsen dienen dem Ausgleich der Schrägstellung, da die Packstücke in aller Regel rechtwinklig auf der Quellpalette angeordnet sind und das Fahrzeug parallel zum Gang und zur Palette vor dieser stehen bleibt.

Linearachsen sind technisch nur schwer umzusetzen und erfüllen meist nicht die Anforderungen an Steifigkeit, Genauigkeit und Kosten, weshalb für Kommissionierroboter flache Armkinematiken mit drei vertikalen Achsen bekannt sind. Nachteilig ist hier eine komplexere Ansteuerung der Achsen.

Aus der EP 1 142 674 A2 ist ein stationärer Roboter bekannt, der Werkstücke zwischen zwei Pressen transferiert. An dem Handgelenk eines 6-Achsroboters ist hierbei ein Zusatzarm mit zwei an einer vertikale Achse verbundenen Armelementen angebracht, die über einen Riementrieb mit Riemenrädern gekoppelt sind. Ein mit dem Armelement aufgenommenes Werkstück kann mit dem Roboter auf einer geraden Linie zwischen den Pressen bewegt werden.

Aus der US 5 046 992 ist ein Roboterarm für einen Einsatz in der Elektronikindustrie bekannt, der für die Handhabung und den Transport von Halbleiter-Wafern innerhalb des Produktionsprozesses vorgesehen ist. Dabei wird durch kinematische Kopplung von Armabschnitten, die um parallele Vertikal-Schwenkachsen beweglich sind, eine Linearbewegung am Roboterarm erzeugt. Diese Linearbewegung schließt auch den Greifer am äußeren Ende des Roboterarms mit ein. Die Anforderungen an Roboter in der Elektronikindustrie, bei denen es auf eine möglichst exakte und schonende Handhabung von kleinen, empfindlichen Halbleiterbauelementen ankommt, sind allerdings nicht mit den Anforderungen an Kommissionier-Flurförderzeugen, also Kommissionierrobotern, in Lagerhallen zu vergleichen, wo es um die Handhabung von vergleichsweise großen und schweren Lasten, insbesondere von auf Paletten stehenden Packstücken, geht. Kommissionierroboter fahren in Regalgassen an langen Regalreihen entlang und müssen seitlich tief in die Regale greifen können, um auch Packstücke aus hinteren Regalbereichen aufzunehmen. Insbesondere sind bei Kommissionierrobotern sehr viel höhere Anforderungen an die Beweglichkeit des Greifers gestellt als bei Robotern in Produktionsprozessen der Elektronikindustrie, die in definierten Räumen mit stark begrenzten Manövrieraufgaben arbeiten. Hier können die Produktionsprozesse so ausgelegt werden, dass die erforderlichen Manöver der Roboter auf rein lineare Bewegungen eingeschränkt werden können. Im Gegensatz dazu müssen sich Kommissionierroboter in Lagerhallen auf veränderliche Situationen einstellen können, was insbesondere auch für die Beweglichkeit des Roboterarms und des Greifers gilt. Außerdem ist der Roboterarm von Kommissionierrobotern einerseits im ausgefahrenen Zustand weit ausladend, soll aber andererseits für Fahrten durch enge Regalgassen möglichst innerhalb der Fahrzeugkontur zusammenklappbar sein.

Ein gattungsgemäßer mobiler Kommissionierroboter ist aus der Figur 4 der WO 2017/138377 A1 bekannt. Bei Drehung um die Armgelenksdrehachsen des Kommissionierroboters wird eine horizontale Linearbewegung des Handgelenks und damit eine lineare Ausschub-/Einschubbewegung des Roboterarms an der Handgelenksdrehachse erzeugt, und bei Drehungen der Armgelenksdrehachsen wird eine Ausgleichsdrehung der Handgelenksdrehachse erzeugt, die eine von der Bewegung der Armelemente unabhängige Orientierung des Aufnahmewerkzeugs herstellt.

Der vorliegenden Erfindung liegt die Aufgabe zugrunde, einen Kommissionierroboter der eingangs genannten Art so auszugestalten, dass die Ansteuerung des Roboterarms unter Beibehaltung der Beweglichkeit des Greifers und der Kompaktheit des Fahrzeugs im Fahrbetrieb erleichtert wird.

Diese Aufgabe wird durch den mobilen Kommissionierroboter nach Anspruch 1 gelöst.

Durch die Kopplung der Achsen, z.B. durch ein Zahnriemengetriebe mit unterschiedlichen Riemenscheiben, entsteht eine zwangsläufige Gleichzeitigkeit der Bewegung durch einen einzigen Antrieb. Wird beispielsweise in der ersten Armgelenksdrehachse eine Riemenscheibe mit doppelter Zähnezahl bzw. mit doppeltem Durchmesser im Vergleich zur Riemenscheibe in der zweiten Armgelenksdrehachse eingesetzt, so entsteht in der zweiten Armgelenksdrehachse eine Bewegung mit doppelter Winkelgeschwindigkeit im Vergleich zur ersten Armgelenksdrehachse. Das Übersetzungsverhältnis der Drehantriebsübersetzungen beträgt in diesem Fall 1:2. Bei gleich langen Armelementen kann auf diese Weise (aus einem in der ersten Armgelenksdrehachse sitzenden Koordinatensystem betrachtet) eine Linearbewegung des äußeren Endes der Armelemente radial von der ersten Armgelenksdrehachse weg (Ausschubbewegung) oder radial zur ersten Armgelenksdrehachse hin (Einschubbewegung) erzeugt werden.

Die Drehrichtungen der aufeinander folgenden Armgelenksdrehachsen sind jeweils gegensinnig. Außerdem beträgt das Übersetzungsverhältnis der Drehantriebsübersetzung der ersten Armgelenksdrehachse zu der Drehantriebsübersetzung der zweiten Armgelenksdrehachse vorzugsweise 1:2, während die weiteren Armgelenksdrehachsen Drehantriebsübersetzungen mit Übersetzungsverhältnissen von 1:1 aufweisen. Dabei sind die horizontalen Abstände der in der Reihe aufeinander folgenden Armgelenksdrehachsen sowie der horizontale Abstand der letzten Armgelenksdrehachse zur Handgelenksdrehachse vorteilhafterweise gleich. Damit ergibt sich eine Kinematik, bei der die horizontalen Schwenkbewegungen der Armelemente durch gegensinnige Schwenkbewegungen der nachfolgenden Armelemente ausgeglichen werden. Dadurch wird insgesamt eine lineare Bewegung der Armgelenksachsen erzeugt.

Zweckmäßigerweise sind die Drehantriebsübersetzungen mechanisch gekoppelt. Dadurch können insbesondere mehrere Armelemente mit einem einzigen Motor angetrieben werden.

Gemäß der Erfindung ist ein zusätzlicher, über die Armgelenksdrehachsen gekoppelter Greifer-Antrieb vorgesehen, der bei Drehungen der Armgelenksdrehachsen eine Ausgleichsdrehung der Handgelenksdrehachse erzeugt, die eine von der Bewegung der Armelemente unabhängige Orientierung des Aufnahmewerkzeugs herstellt.

Durch die Kopplung aller Armgelenksdrehachsen und der Handgelenksdrehachse mittels des Greifer-Antriebs wird eine feste Orientierung des Aufnahmewerkzeugs, insbesondere des Greifers, im globalen (Fahrzeug-festen) Koordinatensystem erreicht. Dies bietet vor allem im Kommissionierumfeld Vorteile. Im Kommissionierumfeld ist eine Ausrichtung vor allem in Ganglängsrichtung (zur Ablage von Paketen auf der Zielpalette) oder quer dazu (zum Picken von der Quellpalette) sinnvoll. Da die Aufnahmeposition in Gang-Längsrichtung nicht vorab bekannt ist, muss das Fahrzeug z.B. mittig mit der ersten Armgelenksdrehachse vor der Quellpalette parken. Der Greifer kann dann schon senkrecht zur Gang-Längsrichtung ausgerichtet sein. Nun muss aber eine Positionskorrektur in Gang-Längsrichtung erfolgen, da das aufzunehmende Packstück nicht immer mittig auf der Quellpalette steht. Der ganze Roboterarm muss also um die erste Armgelenksdrehachse gedreht werden. Die Orientierung des Greifers (hier quer zum Gang) sollte dabei nicht verändert werden. Dazu dient der Greifer-Antrieb, der bei Drehungen der Armgelenksdrehachsen eine Ausgleichsdrehung der Handgelenksdrehachse erzeugt, die eine von der Bewegung der Armelemente unabhängige Orientierung des Aufnahmewerkzeugs herstellt.

Gemäß der Erfindung ist der Greifer-Antrieb als Riemenantrieb ausgebildet.

Gemäß der Erfindung weist der als Riemenantrieb ausgebildete Greifer-Antrieb Riemenräder auf, die konzentrisch zu den Armgelenksdrehachsen sowie zur Handgelenksdrehachse angeordnet und über Riemen miteinander verbunden sind. Dabei weisen alle Riemenräder den gleichen Durchmesser auf. Das erste Riemenrad ist konzentrisch zur ersten Armgelenksdrehachse angeordnet und drehfest mit dem vorhergehenden, dem Hubmast am nächsten liegenden, ersten Armelement verbunden. Das letzte Riemenrad ist konzentrisch zur Handgelenksdrehachse angeordnet und drehfest mit dem Aufnahmewerkzeug verbunden. Im Gegensatz dazu ist das an der dazwischen liegenden Armgelenksdrehachse angeordnete Riemenrad drehbar gelagert. Dieses kann sich sowohl gegenüber dem jeweils vorhergehenden, als auch gegenüber dem jeweils nachfolgenden Armelement frei drehen.

Die Orientierung des Greifers ändert sich somit global weder bei Aus- oder Einschubbewegungen des Roboterarms noch bei Drehungen des gesamten Arms um die erste Armgelenksdrehachse.

Zweckmäßigerweise ist der Arm-Antrieb als Räderantrieb, insbesondere Riemen-, Zahnrad- oder Kettenantrieb, ausgebildet. Dabei werden die gewünschten Übersetzungsverhältnisse durch entsprechende Wahl der Riemenscheibendurchmesser oder Zähnezahl der Zahnräder eingestellt.

Gemäß einer besonders vorteilhaften Ausgestaltung weist der als Riemenantrieb ausgebildete Arm-Antrieb Riemenräder auf, die konzentrisch zu den Armgelenksdrehachsen angeordnet und über einen Riemen miteinander verbunden sind. Dabei ist das erste Riemenrad konzentrisch zur ersten Armgelenksdrehachse angeordnet und drehfest mit dem vorhergehenden, dem Hubmast am nächsten liegenden, ersten Armelement verbunden. Das weitere Riemenrad weist einen im Vergleich zum ersten Riemenrad halben Durchmesser auf und ist drehfest mit dem dritten Armelement verbunden. Der horizontale Abstand der in der Reihe aufeinander folgenden Armgelenksdrehachsen sowie der horizontale Abstand der letzten Armgelenksdrehachse zur Handgelenksdrehachse sind bevorzugt gleich und die Drehrichtungen der aufeinander folgenden Armgelenksdrehachsen sind gegensinnig.

Aufgrund der unterschiedlichen Durchmesser der Riemenräder beträgt das Übersetzungsverhältnis der Drehantriebsübersetzung der ersten Armgelenksdrehachse zur Drehantriebsübersetzung der zweiten Armgelenksdrehachse 1:2.

Vorzugsweise ist in der ersten Armgelenksdrehachse ein Antriebsmotor vorgesehen, der das zweite Armelement gegenüber dem ersten Armelement dreht.

Ein Antriebsmotor für den Greifer-Antrieb kann dabei sowohl am ersten Riemenrad, insbesondere in der ersten Armgelenksdrehachse, oder in der Handgelenksdrehachse verbaut sein. Ist der Antriebsmotor in der ersten Armgelenksdrehachse angeordnet, so ist das dort befindliche Riemenrad am Antriebsmotor befestigt, der wiederum drehfest am ersten Armelement befestigt ist. Der Antriebsmotor ist dabei mit sehr geringen Drehzahlen auszustatten (Getriebe), weil dieser Antrieb 1:1 die Orientierung des Aufnahmewerkzeugs stellt (sinnvolle Positionen sind nur senkrecht zum Gang nach links, oder nach vorne, oder senkrecht zum Gang nach rechts). Ist der Antriebsmotor für den Greifer-Antrieb nahe der Handgelenksdrehachse verbaut, dann ist das Riemenrad der Handgelenksdrehachse über diesen Antriebsmotor mit dem Greifer verbunden. Die Anbindung des Antriebsmotors am festen, ersten Armelement hat Vorteile, weil keine Kabel nach vorne gezogen werden müssen (Drehdurchführungen sind technisch anspruchsvoll) und außerdem die Masse des Antriebsmotors weiter zum Hubmast hin gezogen werden kann. Damit ist eine bessere Standsicherheit gewährleistet. Außerdem muss weniger Masse beschleunigt werden.

In einer besonders vorteilhaften Ausgestaltung der Erfindung sind der Arm-Antrieb und der Greifer-Antrieb gemeinsam im Roboterarm verbaut. Dabei verbindet der für den Armantrieb vorgesehene Riemenantrieb alle Armgelenksdrehachsen miteinander, während der davon getrennte, für den Greifer-Antrieb vorgesehene, zusätzliche Riemenantrieb sowohl alle Armgelenksdrehachsen als auch die Handgelenksdrehachse miteinander verbindet. Es sind also zwei voneinander getrennte Riemenantriebe mit jeweils eigenen Riemen vorgesehen, die beide im Roboterarm eingebaut sind. Der Riemen bzw. die Riemen des Arm-Antriebs erstrecken sich über alle Armgelenksdrehachsen. Daneben verlaufen die Riemen des Greifer-Antriebs über alle Armgelenksdrehachsen und die Handgelenksdrehachse.

In einer Variante der Erfindung verfügt der Arm-Antrieb über virtuell gekoppelte Antriebe. Die Ansteuerung der Antriebe wird steuerungsseitig immer im gewünschten Drehzahlverhältnis gefahren. Auf diese Weise ist kein Rädergetriebe, insbesondere kein Riemen-, Zahnrad- oder Kettengetriebe, nötig, sondern die Kopplung wird durch eine Software-seitige Verriegelung der Achsen bewerkstelligt.

Die Armelemente können inline, d.h. auf gleicher Höhe, oder vorteilhafterweise auch jeweils übereinander bzw. untereinander verbaut werden. Sind die Armelemente in unterschiedlichen Höhen verbaut, ist auch eine lineare Bewegung z.B. der in der Reihe an dritter Stelle angeordneten Armgelenksachse durch die in der Reihe an erster Stelle angeordnete Armgelenksachse hindurch möglich. Dies ist insbesondere bei der Einschubbewegung von Vorteil, weil dadurch die minimale Länge der Kinematik und damit der minimale Greifabstand verringert werden, was weitere Möglichkeiten im Design des Kommissionierroboters eröffnet.

Bei der Einschubbewegung kann außerdem das Aufnahmewerkzeug eingeklappt werden, so dass der gesamte Roboterarm inklusive Aufnahmewerkzeug im eingeschobenen Zustand innerhalb der Fahrzeugkontur zu liegen kommen kann. Dadurch ist die Manövrierfähigkeit durch enge Regalgassen erheblich verbessert.

Die Erfindung eignet sich zum Picken, also zum Greifen von Objekten, im Rahmen des Kommissionierprozesses und zum Ablegen der Objekte auf einem Zielladungsträger, z.B. einer Zielpalette. Hierzu gehört z.B. das Picken von Packstücken aus Regalen. Insbesondere ist die Erfindung für den Einsatz in Lagerhäusern und Regalgängen mit engen Wegen mit Überhol- und Begegnungsverkehr und/oder engen Kurvenradien sowie in Gängen mit beidseitig angeordneten Regalen, die beide bedient werden sollen ("Z-Picken" mit Wechsel der Gangseite), geeignet. Auch für eine flächenoptimierte und/oder zeitoptimierte Bewirtschaftung mit daraus folgenden schnellen Fahrgeschwindigkeiten kann die Erfindung mit Erfolg eingesetzt werden. Ebenso ist eine raumoptimierte Bestückung der Regale möglich (geringe Freiräume zu seitlichen Regalständern und geringe Freiräume zu darüber auf Regal-Traversen eingestapelten Ladungsträgern in der zweiten Regalebene). Außerdem eignet sich die Erfindung für eine gemischte Bewirtschaftung mit manuellen und autonomen Pickern.

Die Erfindung bietet eine ganze Reihe von Vorteilen:
Die Kinematik des Roboterarms wird durch die Kopplung der Armgelenksdrehachsen in eine lineare Bewegung überführt. Damit wird die Ansteuerung (Vorwärts- und Rückwärtstransformation der Kinematik) deutlich vereinfacht. Die Bewegung der Armgelenksdrehachsen wird in ein zylindrisches Koordinatensystem überführt und kann somit durch Angabe von Winkel und Radius auf einfache Art und Weise definiert werden.

Insbesondere auch im manuellen Betrieb wird die Bedienbarkeit deutlich vereinfacht. Der manuelle Betrieb kann in einem nicht-autonomen Lager sinnvoll sein, wenn Kommissionierroboter für das Picken sehr schwerer Packstücke benutzt werden. Weiterhin ist der manuelle Betrieb in der Inbetriebnahmephase oder beim Auftreten von Störungen sinnvoll. Durch die Kopplung der Armgelenksdrehachsen wird der Bedienperson die Bedienung wesentlich vereinfacht, weil sie durch die Orientierung der ersten Armgelenksdrehachse schon auf das zu greifende Packstück "zielen" kann und dann nur noch über eine lineare Bewegung an das Packstück heranfahren muss. Der Greifer wird durch den Greifer-Antrieb ausgerichtet. Durch die mechanische Kopplung der Armgelenksdrehachsen können Bewegungen des Roboters im PTP-Verfahren (Point-to-Point) angefahren werden. Dieses Verfahren stellt die einfachste Art der Steuerung von Kinematiken dar, verbietet sich aber in der Regel in Umfeldern mit großer Kollisionsgefahr. Ein solches Umfeld liegt aber im Lagerhaus vor, wo mit Paletten neben der Zielpalette, mit Regalständern und -holmen oder mit dem eigenen Fahrzeug kollidiert werden kann. Mit der vorliegenden Erfindung kann nach Erreichen der Zielhöhe mit der Hubachse des Hubmastes in eine PTP-Steuerung der flachen Kinematik des Roboterams umgeschaltet werden, da dann keine Kollisionsgefahr mehr besteht. Liegt die Zielhöhe tiefer als die aktuelle Position des Roboterarmes, kann sogar unmittelbar über alle Achsen mit PTP-Steuerung gefahren werden, was sich weiterhin schonend auf die Mechanik auswirkt.

Weitere Vorteile und Einzelheiten der Erfindung werden anhand des in den schematischen Figuren dargestellten Ausführungsbeispiels näher erläutert. Hierbei zeigt
- Figur 1: eine perspektivische Darstellung des erfindungsgemäßen Kommissionierroboters,
- Figur 2: den Roboterarm des erfindungsgemäßen Kommissionierroboters mit gekoppelten Achsen in der Draufsicht,
- Figur 3: eine schematische Darstellung der linearen Ausschubbewegung der gekoppelten Achsen,
- Figur 4: eine schematische Darstellung der linearen Einschubbewegung der gekoppelten Achsen,
- Figur 5: eine schematische Darstellung der gekoppelten Achsen im eingeschobenen Ruhezustand,
- Figur 6: eine Funktionsdarstellung des Arm-Antriebs des erfindungsgemäßen Kommissionierroboters,
- Figur 7: eine Funktionsdarstellung des Arm-Antriebs im ausgeschobenen Zustand,
- Figur 8: eine Funktionsdarstellung des Greifer-Antriebs des erfindungsgemäßen Kommissionierroboters,
- Figur 9: eine Funktionsdarstellung des Greifer-Antriebs mit linksseitiger Orientierung des Greifers zum Regal (Quellpalette),
- Figur 10: eine Funktionsdarstellung des Greifer-Antriebs mit rechtsseitiger Orientierung des Greifers zum Regal (Quellpalette)und
- Figur 11: eine Funktionsdarstellung des Greifer-Antriebs mit Orientierung des Greifers zu einer senkrecht stehenden, in Ganglängsrichtung stehenden Palette (Zielpalette).

In den Figuren sind dieselben Merkmale jeweils mit denselben Bezugsziffern versehen.

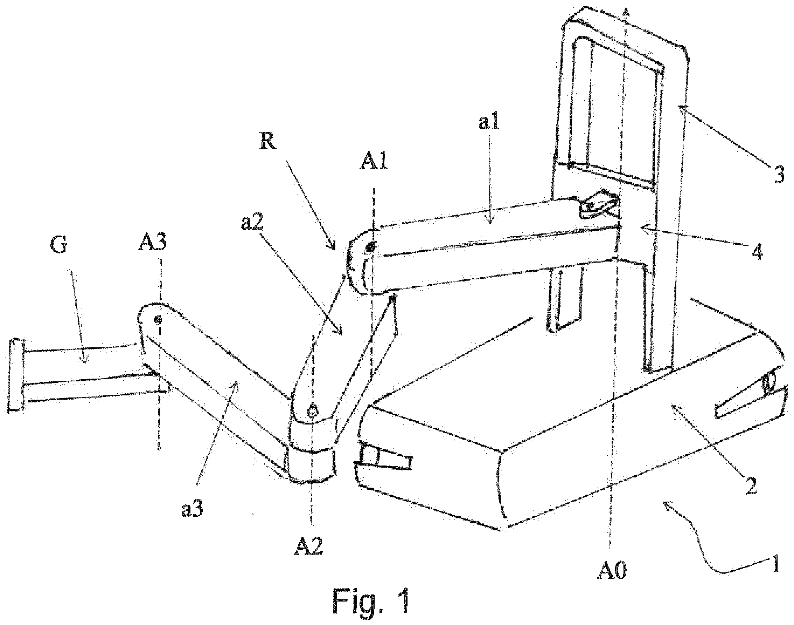

Die Figuren 1 bis 5 beziehen sich auf Ausführungsbeispiele, bei denen sowohl ein Arm-Antrieb als auch ein Greifer-Antrieb verbaut sind.

In der Figur 1 ist der erfindungsgemäße Kommissionierroboter 1 mit einer mobilen (fahrenden) autonomen Plattform 2 gezeigt, auf der ein vertikal ausgerichteter Hubmast 3 mit einem daran höhenbeweglich angebrachten Hubschlitten 4 befestigt ist. Am Hubschlitten 4 ist der horizontal ausgerichtete Roboterarm R angebracht, der aus drei Armelementen a1, a2, a3 zusammengesetzt ist. Die drei Armelemente a1, a2, a3 sind über vertikal ausgerichtete Armgelenksdrehachsen A1 und A2 gelenkig miteinander verbunden. Das erste Armelement a1 ist starr am Hubschlitten 4 befestigt und kann mit diesem vertikal entlang der Hubachse A0 des Hubmastes 3 bewegt werden. Das letzte Armelement a3 ist über eine vertikale Handgelenksdrehachse A3 mit dem als Greifer G ausgebildeten Aufnahmewerkzeug G gelenkig verbunden. Die Armelemente a1, a2, a3 sind untereinander angeordnet und bilden eine flache Kinematik des Roboterams R.

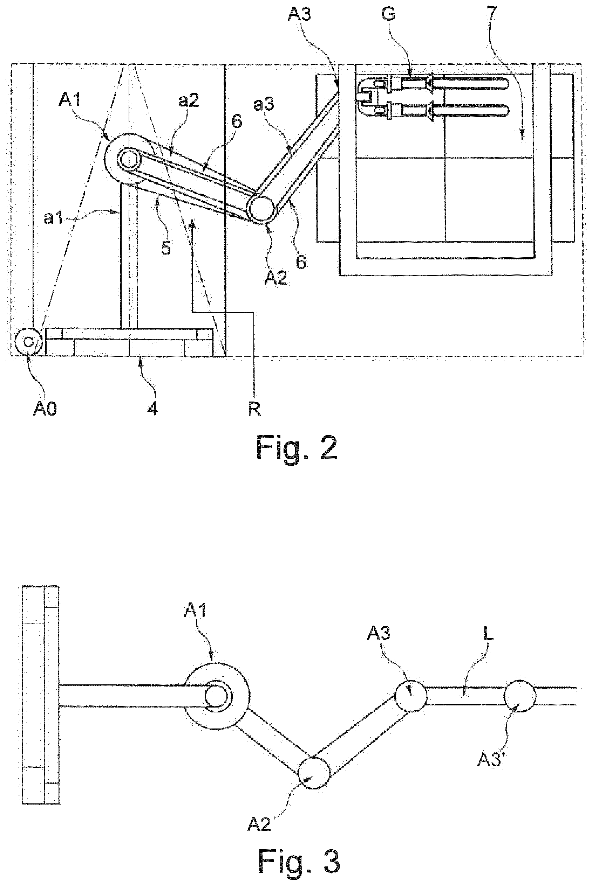

Die Figur 2 zeigt den Roboterarm R aus Figur 1 in der Draufsicht ohne autonome, fahrende Transportplattform. Es handelt sich dabei um einen für Kommissioniertätigkeiten vorteilhaften Roboterarm R mit flacher Kinematik, der am nicht dargestellten Hubmast über den Hubschlitten 4 höhenverstellbar befestigt ist. Die Hubachse ist als Achse A0 bezeichnet. Daran ist das nicht drehbare Armelement a1 befestigt. Über die Armgelenksdrehachse A1 ist ein weiteres Armelement a2 drehbar befestigt. Daran ist über die Armgelenksdrehachse A2 ein wiederum drehbares, weiteres Armelement a3 befestigt, an dem wiederum drehbar über die Handgelenksdrehachse A3 der Greifer G befestigt ist.

Riemengetriebe 5, 6 sind zur Kraftübertragung in die Armgelenksdrehachsen A2 und A3 vorgesehen. Auf diese Weise ist es möglich, alle Antriebe nahe der Armgelenksdrehachse A1 (oder noch weiter Richtung Hubmast 3 hin) anzuordnen. Dadurch ergeben sich die Vorteile des Entfalls von Energieversorgungsleitungen zu den einzelnen Armgelenksdrehachsen, einer kleineren Bauweise der Armgelenksdrehachsen A2 und A3, sowie einer Verlagerung der Masse zurück zum Festpunkt der Kinematik.

Die Figur 2 zeigt den Kommissionierroboter 1 in der Draufsicht während des Pickvorgangs. Während des Pickens werden von dem Kommissionierroboter 1 mittels des Greifers G Packstücke von sortenreinen Ladungsträgern (Paletten/Quellpaletten) aus dem Regal 7 entnommen. Anschließend werden diese Packstücke auf einer Zielpalette abgestellt. Auf der Zielpalette entsteht ein nicht sortenreines, gemischtes Packmuster aus Packstücken von diversen Quellpaletten, das kundenspezifisch zusammengestellt wird. Die Zielpalette wird entweder ebenfalls auf dem Kommissionierroboter 1 mitgeführt oder wird durch ein begleitendes autonomes Fahrzeug bereitgehalten. Weiterhin kann das gepickte Packstück auch einer stationären Kommissionieranlage zugeführt werden.

Im Vergleich zu herkömmlichen Roboterarmen, bei denen jede der drei Armgelenksdrehachsen A1, A2, A3 einzeln und unabhängig voneinander angesteuert werden können, zielt die gezeigte Ausführungsform einer 3-achsigen, flachen Armkinematik durch die kinematische Kopplung der beiden Armgelenksdrehachsen A1 und A2 darauf ab, den Steuerungsaufwand zu verringern. Hierzu sind die Armelemente a2 und a3 und somit die Armgelenksdrehachsen A1, A2 miteinander über Riemenräder eines als Riemengetriebes 5 ausgebildeten Arm-Antriebs gekoppelt, wobei das in der Armgelenksdrehachse A1 liegende Riemenrad doppelten Durchmesser im Vergleich zu dem in der Armgelenksdrehachse A2 liegenden Riemenrad hat. So entsteht eine lineare Ausschubbewegung des Roboterarms R. Dies ermöglicht die Definition der Position der Armgelenksdrehachse A3 über den Winkel in der Armgelenksdrehachse A1 und die Länge der virtuellen Linearachse der Armelemente a2, a3. Durch die Kopplung der Armgelenksdrehachsen A1 und A2 durch einen Zahnriemen entsteht eine zwangsläufige Gleichzeitigkeit der Bewegung durch einen gemeinsamen Antrieb. Im vorliegenden Ausführungsbeispiel wird in der Armgelenksdrehachse A1 ein Riemenrad mit doppelter Zähnezahl bzw. mit doppeltem Durchmesser im Vergleich zum Riemenrad in der Armgelenksdrehachse A2 eingesetzt. Dadurch entsteht in der Armgelenksdrehachse A2 eine Bewegung mit doppelter Winkelgeschwindigkeit im Vergleich zur Armgelenksdrehachse A1. Die Armelemente a1 und a2 weisen bevorzugt die gleiche Armlänge auf. Aus einem in der Armgelenksdrehachse A1 sitzenden Koordinatensystem betrachtet, entsteht bei gleichen Armlängen für die Armelemente a2 und a3 eine Linearbewegung der Armgelenksdrehachse A3 radial von der Armgelenksdrehachse A1 weg (Ausschubbewegung) oder radial zur Armgelenksdrehachse A1 hin (Einschubbewegung). Der nicht näher dargestellte Antrieb des Riemengetriebes 5 und somit der gekoppelten Achsen A1, A2 ist bevorzugt an dem Armelement a1 im Bereich der Achse A1 und somit nahe an dem Festpunkt der Kinematik angeordnet.

Weiterhin ist ein als Riemengetriebe 6 ausgebildeter Greifer-Antrieb vorgesehen, der die Armgelenksdrehachsen A1 und A2 sowie die Handgelenksdrehachse A3 koppelt. Dadurch kann ein weiterer Antrieb am Roboterarm R eingespart werden. Es verläuft somit ein Riemen des Riemengetriebes 5, beispielsweise ein Zahnriemen, längs des Armelements a2 und Riemen des Riemengetriebes 6, beispielsweise ebenfalls Zahnriemen, längs der Armelemente a2 und a3. Die Übersetzung der Riemenscheiben des Riemengetriebes 5 längs Armelement a2 ist 1:2 und die Übersetzung der Riemenscheiben des Riemengetriebes 6 längs der Armelemente a2 und a3 ist 1:1:1. Die Handgelenksdrehachse A3 und somit der Greifer G kann somit mit einem Antrieb um Achse A1 gedreht und orientiert werden. Die Handgelenksdrehachse A3 kann weiterhin linear ein- und ausgefahren werden in radialer Richtung um Achse A1. Durch das Riemengetriebe 6 längs der Armelemente a2 und a3 wird der Greifer G mitbewegt, so dass der Greifer G stets unabhängig von der Bewegung der Armelemente a2 und a3 in Richtung zum Regal 7 ausgerichtet ist. Bei Kommissioniervorgängen sind nur die Bewegungen gerade nach vorne und senkrecht zur Seite hin relevant, insbesondere dann, wenn mittels des Fahrantriebs des Kommissionierroboters 1 eine exakte Positionierung in Ganglängsrichtung des Regals beim Pickprozess möglich ist. Für diesen Fall kann somit auf einen eigenen Antrieb der Handgelenksdrehachse A3 verzichtet werden.

In Figur 3 ist eine schematische Darstellung der linearen Ausschubbewegung der gekoppelten Armgelenksdrehachsen A1, A2 und der gekoppelten Handgelenksdrehachse A3 gezeigt. Es ist dargestellt, wie sich die Handgelenksdrehachse A3 entlang einer virtuellen Linie L linear bewegt und sich im ausgeschobenen Zustand zur Position A3' verschiebt.

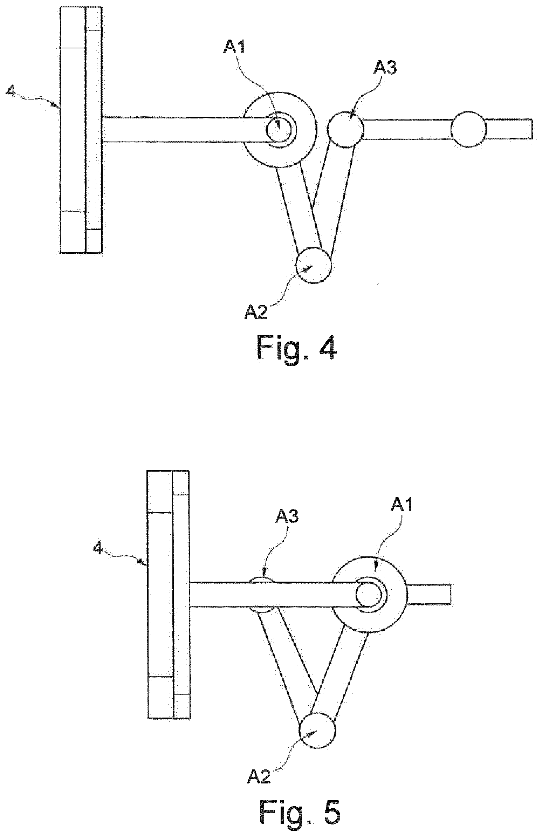

Die Figur 4 zeigt eine schematische Darstellung der linearen Einschubbewegung der gekoppelten Armgelenksdrehachsen A1, A2 und der gekoppelten Handgelenksdrehachse A3. Dabei sind die Armelemente a1, a2, a3 jeweils übereinander verbaut. Dadurch ist auch eine lineare Bewegung der Handgelenksdrehachse A3 durch die Armgelenksdrehachse A1 hindurch möglich, wobei die Handgelenksdrehachse A3 links von der Armgelenksdrehachse A1 angeordnet ist (Figur 5). So kann bei der Einschubbewegung die Handgelenksdrehachse A3 von rechts aus linear über die Position der Armgelenksdrehachse A1 hinweg zum Hubschlitten 4 hinbewegt werden. Damit kann die minimale Länge der Kinematik verringert werden und damit der minimale Greifabstand (oder auch Ablegeabstand) verringert werden.

In Figur 5 sind die gekoppelten Armgelenksdrehachsen A1, A2 und die gekoppelte Handgelenksdrehachse A3 im eingeschobenen Ruhezustand dargestellt. Hierbei ist die Handgelenksdrehachse A3 links von der Armgelenksdrehachse A1, also nahe am Hubschlitten 4, positioniert.

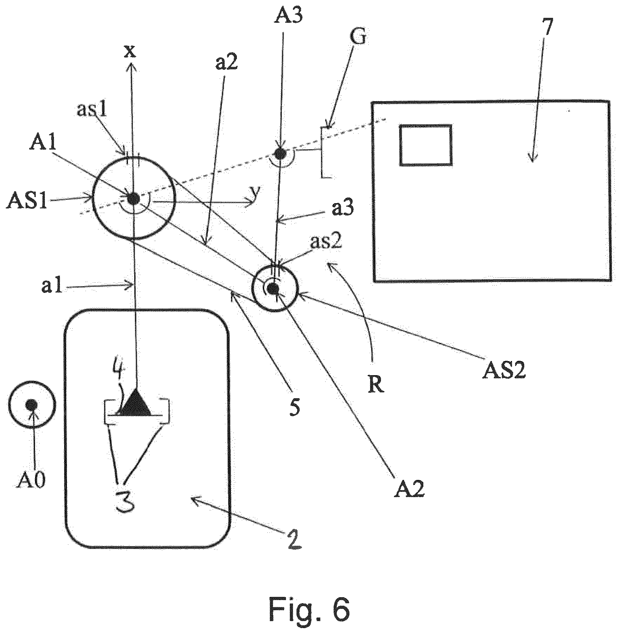

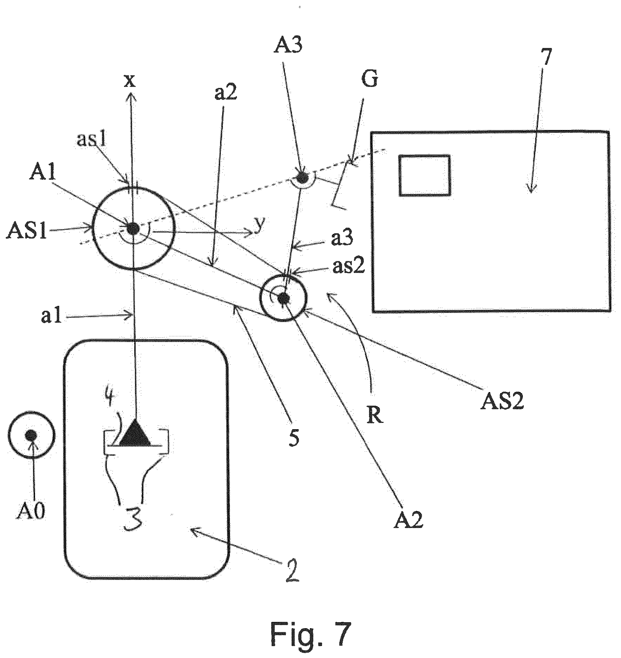

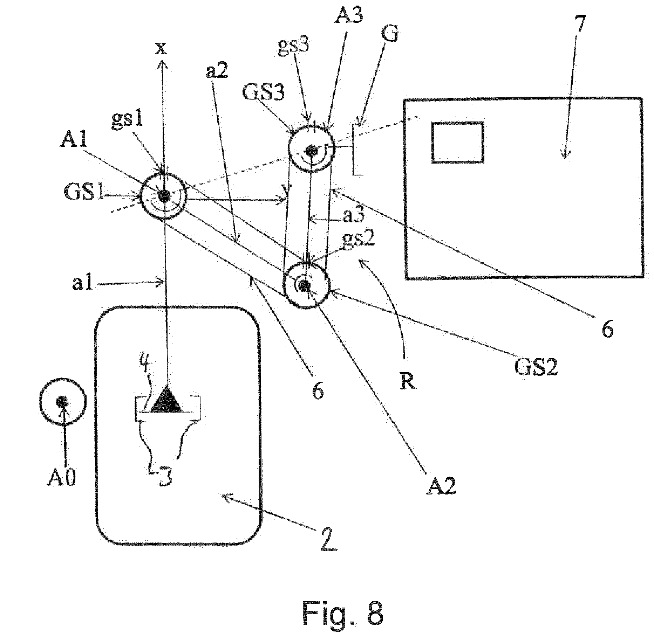

Die Figuren 6 und 7 zeigen die Funktion des Arm-Antriebs des erfindungsgemäßen Kommissionierroboters 1 alleine, während in den Figuren 8 bis 11 die Funktion des Greifer-Antriebs des erfindungsgemäßen Kommissionierroboters 1 dargestellt ist.

In der Figur 6 ist der Arm-Antrieb des Roboterarm R im Detail gezeigt. Das Riemengetriebe 5 des Arm-Antriebs verbindet die konzentrisch zu den Armgelenksdrehachsen A1 und A2 angeordneten Riemenscheiben AS1 und AS2 des Arm-Antriebs. Die Riemenscheibe AS2 weist einen im Vergleich zur Riemenscheibe AS1 halben Durchmesser auf. Dadurch ergibt sich ein Übersetzungsverhältnis von 1:2, d.h. die Riemenscheibe AS2 dreht sich mit doppelter Winkelgeschwindigkeit im Vergleich zur Riemenscheibe AS1 und die Winkeländerung der Armgelenksdrehachse A2 ist doppelt so groß wie die Winkeländerung der Armgelenksdrehachse A1. Die Riemenscheibe AS1 ist konzentrisch zur Armgelenksdrehachse A1 angeordnet drehfest mit dem Armelement a1 verbunden, während die Riemenscheibe AS2 konzentrisch zur Armgelenksdrehachse A2 angeordnet ist und drehfest mit dem Armelement a3 verbunden ist. Ein Zahnriemen 5 verbindet die Riemenscheiben AS1, AS2. Die Stellung der Riemenscheiben ist durch Markierungen as1 und as2 veranschaulicht. Die Markierung as1 ist in x-Richtung, also parallel zum Armelement a1 ausgerichtet, während die Markierung as2 in Richtung des Armelements a3 ausgerichtet ist. Ein Antrieb für die lineare Aus- und Einsschubbewegung des Roboterarms R ist an oder nahe der ersten Armgelenkdrehachse A1 angeordnet und dreht das Armelement a2 um die erste Armgelenkdrehachse A1 gegenüber dem Armelement a1.

Die Figur 7 zeigt den Roboterarm R aus Figur 6 in einem weiter ausgeschobenen Zustand. Die drehfest mit dem Armelement a1 verbundene Riemenscheibe AS1 weist mit der Markierung as1 weiterhin in x-Richtung, hat sich also nicht gedreht. Dagegen hat sich die Riemenscheibe AS2 gemeinsam mit dem Armelement a2 gedreht. Das Armelement a3 ist in der Zeichnung nach rechts geschwenkt und die Markierung as2 der Riemenscheibe AS2 ist dieser Bewegung gefolgt, ist also weiterhin in Richtung des Armelements a3 ausgerichtet. Durch die Übersetzung von 2:1 ist die Winkeländerung der Armgelenksdrehachse A2 doppelt so groß wie die Winkeländerung der Armgelenksdrehachse A1. Durch das Riemengetriebe 5 hat sich auch die Position des Greifers G verändert, der jetzt nicht mehr senkrecht zum Regal 7 ausgerichtet ist, sondern in eine schräge Position verstellt ist. In dieser Position wäre ein Greifen von Objekten im Regal 7 kaum möglich. Daher muss die Position des Greifers G nachreguliert werden. Dies ist automatisch durch den Greifer-Antrieb möglich, dessen Funktion in den nachfolgenden Figuren 8 bis 11 dargestellt ist.

In der Figur 8 ist die Funktion des Greifer-Antriebs im Detail dargestellt. Konzentrisch zu den Armgelenksachsen A1 und A2 sowie der Handgelenksachse A3 sind Riemenscheiben GS1, GS2 und GS3 des von dem Riemengetriebe 6 gebildeten Greifer-Antriebs verbaut. Die Riemenscheiben GS1, GS2 und GS3 weisen alle denselben Durchmesser auf. Ein Zahnriemen verbindet die Riemenscheiben GS1 und GS2 und ein weiterer Zahnriemen die Riemenscheiben GS2 und GS3. Die Übersetzungsverhältnisse sind also 1:1:1. Die Riemenscheibe GS1 ist drehfest mit dem Armelement a1 verbunden. Außerdem ist die Riemenscheibe GS3 drehfest mit dem Greifer G verbunden. Dagegen ist die dazwischen liegende Riemenscheibe GS2 an der Armgelenksachse A2 frei drehbar gelagert, kann sich also sowohl gegenüber dem Armelement a2 als auch gegenüber dem Armelement a3 frei drehen. Die Markierungen gs1, gs2 und gs3 der Riemenscheiben GS1, GS2 und GS3 sind in der Zeichnung alle parallel nach oben ausgerichtet.

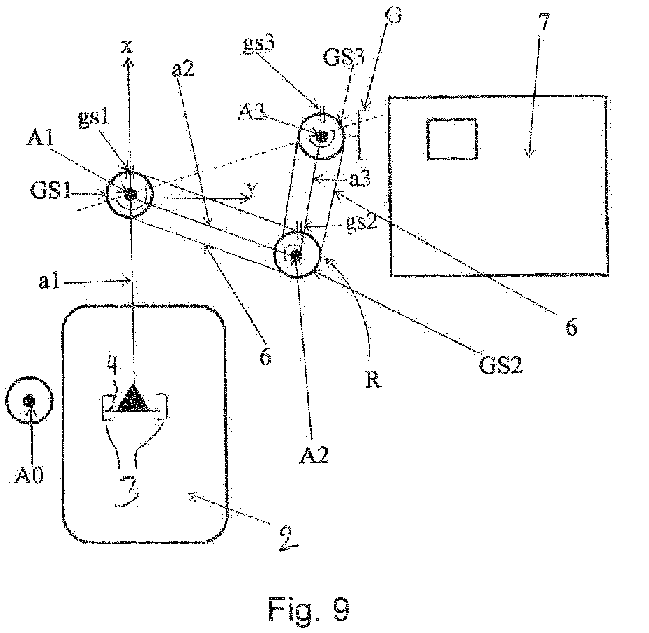

Die Figur 9 zeigt den Greifer-Antrieb aus Figur 8 bei mittels des Arm-Antriebs ausgeschobenem Roboterarm R, wobei ein Objekt im linksseitigen Bereich des Regals gegriffen werden soll. Durch die Konstruktion des Riemenantriebs 6 ergibt sich eine von der Bewegung der Armelemente a2 und a3 unabhängige Orientierung des Greifers G. Der Greifer G ist immer senkrecht zum Regal 7 ausgerichtet, so dass die Objekte im Regal optimal gegriffen werden können. Die Markierungen gs1, gs2 und gs3 der Riemenscheiben GS1, GS2 und GS3 sind in der Zeichnung weiterhin alle parallel nach oben ausgerichtet.

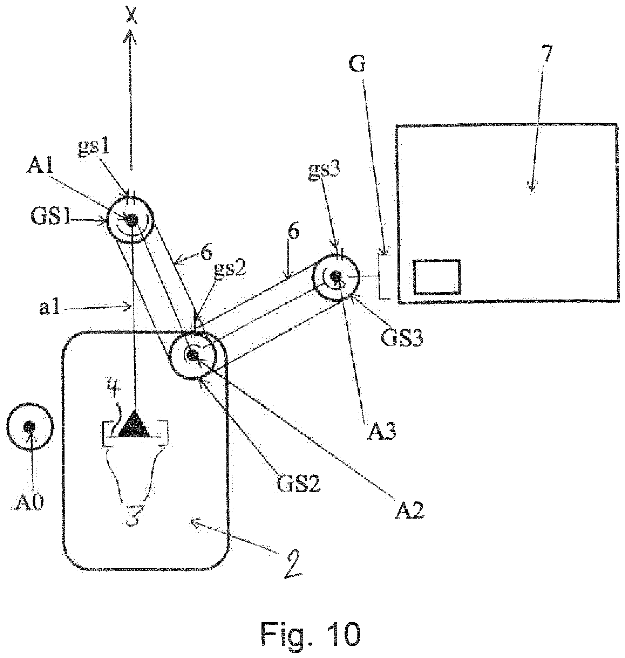

In der Figur 10 ist eine Position des Roboterarms R dargestellt, bei der ein Objekt im rechtsseitigen Bereich des Regals 7 gegriffen werden soll. Auch in dieser Position des Roboterarms R ist der Greifer G senkrecht zum Regal 7 ausgerichtet.

Anhand der Figuren 8 bis 10 soll die Funktion des Kommissionierroboters 1 bei der Aufnahme eines Packstücks seitlich aus einem Regal 7 bzw. einer Quellpalette näher erläutert werden.

In einem derartigen Kommissionierumfeld ist eine Ausrichtung des Greifers G quer zur Ganglängsrichtung (x-Richtung) einer Regalanlage, entlang der der Kommissionierroboter 1 fährt, zum Picken von Packstücken von einer im Regal 7 stehenden Quellpalette sinnvoll. Da die Aufnahmeposition des Packstückes in Gang-Längsrichtung (x-Richtung) nicht vorab bekannt ist, muss der Kommissionierroboter 1 z.B. mittig mit der ersten Armgelenksdrehachse A1 vor der Quellpalette parken. Der Greifer G kann dann schon senkrecht zur Gang-Längsrichtung (x-Richtung) ausgerichtet sein. Nun muss aber eine Positionskorrektur in Gang-Längsrichtung (x-Richtung) erfolgen, da das aufzunehmende Packstück nicht immer mittig auf der Quellpalette steht. Der ganze Roboterarm R muss also um die erste Armgelenksdrehachse A1 gedreht werden. Die Orientierung des Greifers G quer zum Gang sollte dabei nicht verändert werden. Dazu dient der Greifer-Antrieb, der bei Drehungen der Armgelenksdrehachsen A1, A2 eine Ausgleichsdrehung der Handgelenksdrehachse A3 erzeugt, die eine von der Bewegung der Armelemente unabhängige feste Orientierung des Aufnahmewerkzeugs G im globalen (Fahrzeug-festen) Koordinatensystem herstellt, so dass sich der Greifer G weder bei einer Aus- oder Einschubbewegung des Roboterarms R noch bei Drehungen des Roboterarms um die Armgelenkdrehachse A1 ändert.

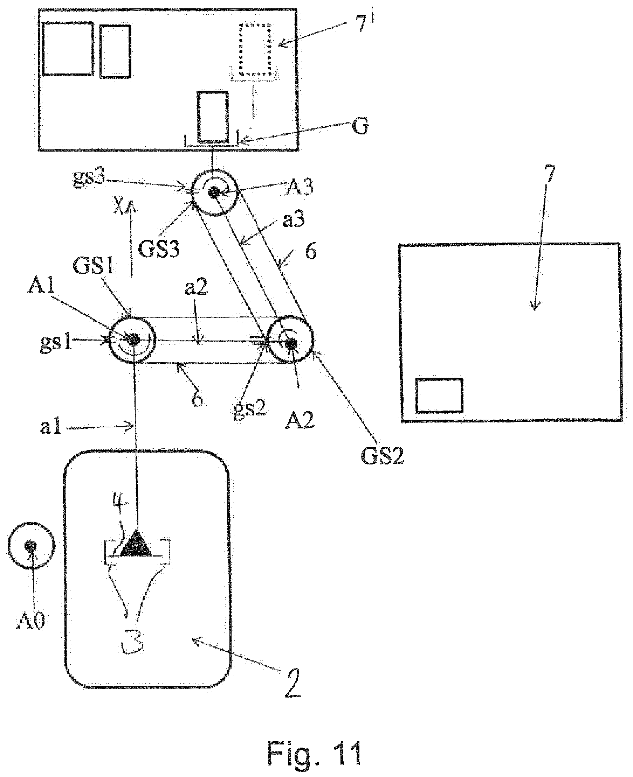

Die Figur 11 zeigt eine Position, bei der der Greifer G durch Verdrehen der Riemenscheibe GS1 mittels eines in der Figur nicht dargestellten Antriebsmotors, der in der Armgelenksachse A1 verbaut ist, neu orientiert wird. Die Riemenscheibe GS1 ist an dem Antriebsmotor befestigt und der Antriebsmotor ist drehfest mit dem Armelement a1 verbunden. Die Markierung gs1 der Riemenscheibe GS1 ist aufgrund der Verdrehung der Riemenscheibe GS1 durch den Antriebsmotor in der Zeichnung nach links ausgerichtet. Über die Kopplung mittels des Riemengetriebes 6 werden die Riemenscheiben GS2 und GS3 gleichsinnig verdreht. Die Markierungen gs2 und gs3 zeigen demgemäß in der Zeichnung ebenfalls nach links. Der Greifer G ist im Vergleich zur Position in Figur 10 um 90° gedreht. Auf diese Weise können Objekte auf einer in Ganglängsrichtung (x-Richtung) und somit im Gang der Regalanlage, entlang dem der Kommissionierroboter 1 fährt, befindliche Zielpalette 7' optimal abgelegt werden. Die Zielpalette 7' kann sich auf dem Kommissionierroboter 1 befinden oder von einem Begleitfahrzeug bereitgestellt werden.

## Patentansprüche

1. Mobiler Kommissionierroboter (1) zur automatischen Kommissionierung von Objekten mit einem vertikal ausgerichteten Hubmast (3) und einem daran höhenbeweglich angebrachten, horizontal ausgerichteten Roboterarm (R) mit drei vom Hubmast (3) ausgehend an einander gereihten Armelementen (a1, a2, a3), welche über Armgelenke mit vertikalen Armgelenksdrehachsen (A1, A2) verfügen und welche über die Armgelenksdrehachsen (A1, A2) gelenkig miteinander verbunden sind, wobei das letzte am äußeren Reihenende angeordnete Armelement (a3) über ein Handgelenk mit vertikaler Handgelenksdrehachse (A3) mit einem Aufnahmewerkzeug (G), insbesondere einem Greifer, zur Aufnahme der Objekte verbunden ist, **dadurch gekennzeichnet, dass** die Armgelenksdrehachsen (A1, A2) über einen gekoppelten Arm-Antrieb mit individuellen Drehantriebsübersetzungen und Drehrichtungen verfügen, die so gewählt sind, dass bei Drehung um die Armgelenksdrehachsen (A1, A2) eine horizontale Linearbewegung des Handgelenks und damit eine lineare Ausschub-/Einschubbewegung des Roboterarms (R) an der Handgelenksdrehachse (A3) erzeugt wird, wobei ein zusätzlicher, über die Armgelenksdrehachsen (A1, A2) gekoppelter Greifer-Antrieb vorgesehen ist, der bei Drehungen der Armgelenksdrehachsen (A1, A2) eine Ausgleichsdrehung der Handgelenksdrehachse (A3) erzeugt, die eine von der Bewegung der Armelemente (a1, a2, a3) unabhängige Orientierung des Aufnahmewerkzeugs (G) herstellt, wobei der Greifer-Antrieb als Riemenantrieb ausgebildet ist und der als Riemenantrieb (6) ausgebildete Greifer-Antrieb Riemenräder (GS1, GS2, GS3) aufweist, die konzentrisch zu den Armgelenksdrehachsen (A1, A2) sowie zur Handgelenksdrehachse (A3) angeordnet und über Riemen miteinander verbunden sind, wobei alle Riemenräder (GS1, GS2, GS3) den gleichen Durchmesser aufweisen, und dass das erste Riemenrad (GS1) konzentrisch zur ersten Armgelenksdrehachse (A1) angeordnet und drehfest mit dem vorhergehenden, dem Hubmast (3) am nächsten liegenden, ersten Armelement (a1) verbunden ist, und das letzte Riemenrad (GS3) konzentrisch zur Handgelenksdrehachse (A3) angeordnet und drehfest mit dem Aufnahmewerkzeug (G) verbunden ist, während das an der dazwischen liegenden Armgelenksdrehachse (A2) angeordnete Riemenrad (GS2) drehbar gelagert ist, so dass dieses sich sowohl gegenüber dem jeweils vorhergehenden (a2), als auch gegenüber dem jeweils nachfolgenden Armelement (a3) frei drehen kann.

2. Mobiler Kommissionierroboter nach Anspruch 1, **dadurch gekennzeichnet, dass** der Arm-Antrieb als Räderantrieb, insbesondere Riemen-, Zahnrad- oder Kettenantrieb, ausgebildet ist.

3. Mobiler Kommissionierroboter nach Anspruch 2, **dadurch gekennzeichnet, dass** der als Riemenantrieb (5) ausgebildete Arm-Antrieb Riemenräder (AS1, AS2) aufweist, die konzentrisch zu den Armgelenksdrehachsen (A1, A2) angeordnet und über einen Riemen miteinander verbunden sind, wobei das erste Riemenrad (AS1) konzentrisch zur ersten Armgelenksdrehachse (A1) angeordnet und drehfest mit dem vorhergehenden, dem Hubmast (3) am nächsten liegenden, ersten Armelement (a1) verbunden ist, und das weitere Riemenrad (AS2) einen im Vergleich zum ersten Riemenrad (AS1) halben Durchmesser aufweist und drehfest mit dem dritten Armelement (a3) verbunden ist, wobei der horizontale Abstand der in der Reihe aufeinander folgenden Armgelenksdrehachsen (A1, A2) sowie der horizontale Abstand der letzten Armgelenksdrehachse (A2) zur Handgelenksdrehachse (A3) gleich sind und wobei die Drehrichtungen der aufeinander folgenden Armgelenksdrehachsen (A1, A2) gegensinnig sind.

4. Mobiler Kommissionierroboter nach Anspruch 3, **dadurch gekennzeichnet, dass** in der ersten Armgelenksdrehachse (A1) ein Antriebsmotor vorgesehen ist, der das zweite Armelement (a2) gegenüber dem ersten Armelement (a1) dreht.

5. Mobiler Kommissionierroboter nach Anspruch 3 oder 4, **dadurch gekennzeichnet, dass** das Übersetzungsverhältnis der Drehantriebsübersetzung der ersten Armgelenksdrehachse (A1) zur Drehantriebsübersetzung der zweiten Armgelenksdrehachse (A2) 1:2 beträgt.

6. Mobiler Kommissionierroboter nach einem der Ansprüche 1 bis 5, **dadurch gekennzeichnet, dass** in der ersten Armgelenksdrehachse (A1) ein Antriebsmotor für den Greifer-Antrieb vorgesehen ist.

7. Mobiler Kommissionierroboter nach einem der Ansprüch 1 bis 5, **dadurch gekennzeichnet, dass** in der Handgelenksdrehachse (A3) ein Antriebsmotor für den Greifer-Antrieb vorgesehen ist.

8. Mobiler Kommissionierroboter nach einem der Ansprüche 1 bis 7, **dadurch gekennzeichnet, dass** der Arm-Antrieb und der Greifer-Antrieb gemeinsam im Roboterarm (R) verbaut sind, wobei der für den Arm-Antrieb vorgesehene Riemenantrieb (5) alle Armgelenksdrehachsen (A1, A2) miteinander verbindet, während der davon getrennte für den Greifer-Antrieb vorgesehene, zusätzliche Riemenantrieb (6) sowohl alle Armgelenksdrehachsen (A1, A2) als auch die Handgelenksdrehachse (A3) miteinander verbindet.

## Claims

1. Mobile order picking robot (1) for the automatic picking of objects with a vertically oriented lifting mast (3) and a horizontally oriented robot arm (R) which is attached thereto in a height-adjustable manner and which has three juxtaposed arm elements (a1, a2, a3), starting from the lifting mast (3), which have arm joints with vertical arm joint axes of rotation (A1, A2) and which are connected in an articulated manner to one another via the arm joint axes of rotation (A1, A2), wherein the last arm element (a3) arranged at the outer end of the series is connected via a wrist with a vertical wrist axis of rotation (A3) to a pick-up tool (G), in particular a gripper, for picking up the objects, **characterized in that** the arm joint axes of rotation (A1, A2) have a coupled arm drive with individual rotary drive ratios and rotational directions which are selected such that with a rotation about the arm joint axes of rotation (A1, A2) a horizontal linear movement of the wrist and thus a linear extension and retraction movement of the robot arm (R) is generated on the wrist axis of rotation (A3), wherein an additional gripper drive is provided, said additional gripper drive being coupled via the arm joint axes of rotation (A1, A2) and with the rotations of the arm joint axes of rotation (A1, A2) generating a compensating rotation of the wrist axis of rotation (A3), which produces an orientation of the pick-up tool (G) independent of the movement of the arm elements (a1, a2, a3), wherein the gripper drive is configured as a belt drive and the gripper drive which is configured as belt drive (6) has belt wheels (GS1, GS2, GS3) which are arranged concentrically to the arm joint axes of rotation (A1, A2) and to the wrist axis of rotation (A3) and are connected together via belts, wherein all of the belt wheels (GS1, GS2, GS3) have the same diameter, and **in that** the first belt wheel (GS1) is arranged concentrically to the first arm joint axis of rotation (A1) and is connected fixedly in terms of rotation to the preceding first arm element (a1) which is located closest to the lifting mast (3), and the last belt wheel (GS3) is arranged concentrically to the wrist axis of rotation (A3) and is connected fixedly in terms of rotation to the pick-up tool (G), while the belt wheel (GS2) which is arranged on the arm joint axis of rotation (A2) located therebetween is rotatably mounted so that this belt wheel can freely rotate both relative to the respectively preceding arm element (a2) and also relative to the respectively following arm element (a3).

2. Mobile order picking robot according to Claim 1, **characterized in that** the arm drive is configured as a geared drive, in particular a belt drive, gear drive or chain drive.

3. Mobile order picking robot according to Claim 2, **characterized in that** the arm drive which is configured as a belt drive (5) has belt wheels (AS1, AS2) which are arranged concentrically to the arm joint axes of rotation (A1, A2) and are connected together via a belt, wherein the first belt wheel (AS1) is arranged concentrically to the first arm joint axis of rotation (A1) and is connected fixedly in terms of rotation to the preceding first arm element (a1) located closest to the lifting mast (3) and the further belt wheel (AS2) has a half diameter in comparison with the first belt wheel (AS1) and is connected fixedly in terms of rotation to the third arm element (a3), wherein the horizontal spacing of the arm joint axes of rotation (A1, A2) following one another in series and the horizontal spacing of the last arm joint axis of rotation (A2) to the wrist axis of rotation (A3) are equal, and wherein the rotational directions of the successive arm joint axes of rotation (A1, A2) are in opposing directions.

4. Mobile order picking robot according to Claim 3, **characterized in that** a drive motor which rotates the second arm element (a2) relative to the first arm element (a1) is provided in the first arm joint axis of rotation (A1).

5. Mobile order picking robot according to Claim 3 or 4, **characterized in that** the gear ratio of the rotary drive ratio of the first arm joint axis of rotation (A1) to the rotary drive ratio of the second arm joint axis of rotation (A2) is 1:2.

6. Mobile order picking robot according to one of Claims 1 to 5, **characterized in that** a drive motor for the gripper drive is provided in the first arm joint axis of rotation (A1).

7. Mobile order picking robot according to one of Claims 1 to 5, **characterized in that** a drive motor for the gripper drive is provided in the wrist axis of rotation (A3).

8. Mobile order picking robot according to one of Claims 1 to 7, **characterized in that** the arm drive and the gripper drive are installed together in the robot arm (R), wherein the belt drive (5) provided for the arm drive connects together all of the arm joint axes of rotation (A1, A2), while the additional belt drive (6), which is separate therefrom and provided for the gripper drive, connects together all of the arm joint axes of rotation (A1, A2) and the wrist axis of rotation (A3).

## Revendications

1. Robot mobile (1) de préparation de commandes pour la préparation automatique de commandes d'objets, avec un mât de levage (3) orienté verticalement et un bras de robot (R) orienté horizontalement, monté mobile en hauteur sur celui-ci, avec trois éléments de bras (a1, a2, a3) alignés les uns à la suite des autres en partant du mât de levage (3), qui présentent des articulations de bras ayant des axes de rotation verticaux (A1, A2) d'articulation de bras et qui sont reliés entre eux de manière articulée par les axes de rotation (A1, A2) d'articulation de bras, le dernier élément de bras (a3), agencé à l'extrémité extérieure de la série, étant relié à un outil de prélèvement (G), en particulier un préhenseur, par un poignet ayant un axe vertical de rotation (A3) d'articulation de poignet pour la saisie des objets, **caractérisé en ce que** les axes de rotation (A1, A2) d'articulation de bras présentent un système d'entraînement de bras couplé à des rapports d'entraînement en rotation individuels, et des sens de rotation qui sont choisis de telle sorte que, lors de la rotation autour des axes de rotation (A1, A2) d'articulation de bras, un mouvement linéaire horizontal du poignet, et donc un mouvement linéaire d'extension / d'insertion du bras de robot (R), est généré au niveau de l'axe (A3) de rotation de poignet, un système supplémentaire d'entraînement pour la préhension, relié via les axes de rotation (A1, A2) d'articulation de bras, étant prévu, qui, lors de rotations des axes de rotation (A1, A2) d'articulation de bras, produit une rotation de compensation de l'axe (A3) de rotation de poignet, qui établit une orientation de l'outil de prélèvement (G) indépendante du mouvement des éléments de bras (a1, a2, a3), le système d'entraînement pour la préhension étant réalisé sous forme d'un entraînement à courroie et le système d'entraînement pour la préhension, réalisé sous forme d'entraînement à courroie (6), présentant des roues à courroie (GS1, GS2, GS3) qui sont agencées de manière concentrique par rapport aux axes de rotation (A1, A2) d'articulation de bras ainsi que par rapport à l'axe (A3) de rotation de poignet et qui sont reliées entre elles par des courroies, toutes les roues à courroie (GS1, GS2, GS3) présentant le même diamètre, et **en ce que** la première roue à courroie (GS1) est agencée de manière concentrique au premier axe de rotation (A1) d'articulation de bras et est reliée de manière solidaire en rotation au premier élément de bras (a1) précédent, le plus proche du mât de levage (3), et la dernière roue à courroie (GS3) est agencée de manière concentrique à l'axe (A3) de rotation de poignet et est reliée de manière solidaire en rotation à l'outil de prélèvement (G), tandis que la roue à courroie (GS2) agencée sur l'axe de rotation (A2) d'articulation de bras situé entre les deux est montée de manière à pouvoir tourner librement, de sorte que celle-ci est apte à tourner aussi bien par rapport à l'élément de bras (a2) respectivement précédent que par rapport à l'élément de bras (a3) respectivement suivant.

2. Robot mobile de préparation de commandes selon la revendication 1, **caractérisé en ce que** le système d'entraînement de bras est conçu sous la forme d'un entraînement par roues, en particulier par courroie, par roue dentée ou par chaîne.

3. Robot mobile de préparation de commandes selon la revendication 2, **caractérisé en ce que** le système d'entraînement de bras, réalisé sous forme d'un entraînement à courroie (5), présente des roues à courroie (AS1, AS2) qui sont agencées de manière concentrique aux axes de rotation (A1, A2) d'articulation de bras et sont reliées entre elles par une courroie, la première roue à courroie (AS1) étant agencée de manière concentrique au premier axe de rotation (A1) d'articulation de bras et étant reliée de manière solidaire en rotation au premier élément de bras (a1) précédent, le plus proche du mât de levage (3), et l'autre roue à courroie (AS2) présente un demi-diamètre par rapport à la première roue à courroie (AS1) et est reliée solidairement en rotation au troisième élément de bras (a3), la distance horizontale des axes de rotation (A1, A2) d'articulation de bras successifs dans la série ainsi que la distance horizontale du dernier axe de rotation (A2) d'articulation de bras par rapport à l'axe de rotation (A3) d'articulation de poignet étant égales, et les sens de rotation des axes de rotation (A1, A2) d'articulation de bras successifs étant opposés.

4. Robot mobile de préparation de commandes selon la revendication 3, **caractérisé en ce qu'**il est prévu dans le premier axe de rotation de bras (A1) un moteur d'entraînement qui fait tourner le deuxième élément de bras (a2) par rapport au premier élément de bras (a1).

5. Robot mobile de préparation de commandes selon la revendication 3 ou la revendication 4, **caractérisé en ce que** le rapport de transmission du rapport d'entraînement en rotation du premier axe de rotation (A1) d'articulation de bras du rapport d'entraînement en rotation du deuxième axe de rotation (A2) d'articulation de bras est de 1:2.

6. Robot mobile de préparation de commandes selon l'une des revendications 1 à 5, **caractérisé en ce qu'**un moteur d'entraînement pour le système d'entraînement pour la préhension est prévu dans le premier axe de rotation (A1) d'articulation de bras.

7. Robot mobile de préparation de commandes selon l'une des revendications 1 à 5, **caractérisé en ce qu'**un moteur d'entraînement pour le système d'entraînement pour la préhension est prévu dans l'axe (A3) de rotation de poignet.

8. Robot mobile de préparation de commandes selon l'une des revendications 1 à 7, **caractérisé en ce que** le système d'entraînement de bras et le système d'entraînement pour la préhension sont montés ensemble dans le bras de robot (R), l'entraînement à courroie (5) prévu pour le système d'entraînement de bras reliant entre eux tous les axes de rotation (A1, A2) d'articulation de bras, tandis que l'entraînement à courroie (6) supplémentaire, séparé de celui-ci et prévu pour le système d'entraînement pour la préhension, relie entre eux aussi bien tous les axes de rotation (A1, A2) d'articulation de bras que l'axe (A3) de rotation de poignet.
